# EUROPEAN PATENT APPLICATION

(11) **EP 3 680 902 A1**
(43) Date of publication of application: **15.07.2020**
(21) Application number: 19200095.8
(22) Date of filing: 27.09.2019
(51) Int. Cl.: G10L 25/60

(54) **2G3G4G SPEECH QUALITY FAULT FOUR-DOMAIN SIX-DIMENSION INTELLIGENT DELIMITATION METHOD**

(30) Priority: 08.01.2019 CN 201910014158
(71) Applicant: Beijing Zhongchuang Telecom Test Co., Ltd, Beijing (CN)
(72) Inventor: Zhifeng, Wang, Beijing (CN)
(74) Representative: AWA Sweden AB

(57) **Abstract**

The present invention discloses a 2G3G4G speech quality fault four-domain six-dimension intelligent delimitation method, comprising the following steps: step 1, establishing four domains for delimiting a poor quality speech and six dimensions influencing the quality of a voice call, wherein the four domains comprise a core domain, an access network domain, a network transmission domain and an opposite terminal domain, and the six dimensions comprise speech MOS value, call dropping, cross talk, single get-through, word slurring and intermittence; step 2, calculating/evaluating the speech MOS value; and step 3, slicing the speech to analyze quality, and presenting the speech quality in a visual waveform. With the above-described method, the present invention can view a speech service quality curve diagram, can visually present a speech fault, and can quickly and effectively delimit and position speech quality.

## Description

### Technical Field

The present invention relates to the technical field of telecommunication operation, in particular to a 2G3G4G speech quality fault four-domain six-dimension intelligent delimitation method.

### Background Art

With the popularization of 4G services, the calls between 4G VoLTE users and 2G/3G users become more and more, and the complaints about the speech quality of VoLTE and 2G/3G calls are also increasing. Therefore, the speech complaint problem between the VoLTE users and the 2G/3G users is required to be solved, and the 2G/3G/4G intercommunication speech quality shall be analyzed. Conventional signaling monitoring cannot solve the speech quality fault problem in the process of calling, such as single get-through, intermittence, transmission delay, jitter and packet loss. The speech quality is required to be analyzed in combination with media monitoring.

A conventional 2G/3G/4G voice call fault is diagnosed on the basis of the separate analysis of a signaling record and a media record. In a voice call, a signaling is first transmitted to the first transmission is signaling; a call channel is established through the signaling; and then voices and a media packet are transmitted. When a user fails in the process of a voice call, the operator will query the get-through and call dropping situations of the speech according to the signaling record, and then queries whether poor quality speech and single get-through faults occur to the call according to the media record. The fault is diagnosed by separating analyzing a signaling and a media.

The diagnosis of the quality of a conventional 2G/3G/4G speech service needs a person skilled in the art to delimit and position the problem, instead of using an automatic intelligent positioning and delimitation method. When a fault occurs to a call, only a highly skilled and experienced person can position the fault.

In the process of a conventional 2G/3G/4G voice call, the analysis on speech quality is presented in the form of a record; the entire calling process only generate one media record; the record will mark whether a single get-through fault occurs in the entire calling process, but cannot display the specific time period when the single get-through fault occurs or the cell the user is located when the fault occurs.

The existing technical solutions mainly have the following defects:
1, In a 2G/3G/4G voice call, the prior art separately analyzes a signaling and a media, and has the defect that a media speech single get-through fault in the calling process cannot be queried in the signaling record. Furthermore, the media record has no signaling related information, and cannot display the variations of position information and switching information of the user in the calling process.
2, When a speech quality fault occurs in the process of a 2G/3G/4G voice call, the prior art performs analysis according to the speech record of a single interface; and when a speech fault occurs, it is difficult to determine the specific position at which the speech fault occurs. Furthermore, the prior art needs a person skilled in the art to delimit and position a problem, instead of using an automatic intelligent delimitation method. When a fault occurs to a call, only an investigation person having professional skills and rich experience can position the fault. The defect in the prior art is to be overcome.
3. When a voice call is analyzed in the prior art, only one media and signaling record is generated in the entire calling process, and the speech quality of the call is not analyzed in detail on the basis of a slicing technology. The defect of the prior art is: the prior art cannot determine the specific time period when a fault occurs or the cell the user is located when the fault occurs; moreover, the analysis of the prior art is presented in the form of a record, and the prior art cannot dynamically present the speech quality from a visual angle.

### Summary of the Invention

The object of the present invention is to provide a 2G3G4G speech quality fault four-domain six-dimension intelligent delimitation method, which is used to solve the problems that the diagnosis efficiency is low and a fault cannot be positioned in time and effectively because the diagnosis of a speech fault in the prior art is on the basis of a signaling record and a media record and has a high requirement for professional skills, and the fault can only be manually delimited and positioned.

To achieve the above object, the present invention provides the following technical solution:
A 2G3G4G speech quality fault four-domain six-dimension intelligent delimitation method, comprising the following steps:
Step 1, establishing four domains for delimiting a poor quality speech and six dimensions influencing the quality of a voice call, wherein the four domains comprise a core domain, an access network domain, a network transmission domain and an opposite terminal domain, and the six dimensions comprise speech MOS value, call dropping, cross talk, single get-through, word slurring and intermittence;
Step 2, calculating/evaluating the speech MOS value; and
Step 3, slicing the speech to analyze quality, and presenting the speech quality in a visual waveform.

Further, as a preferred technical solution, in the step 2, firstly key speech quality data is extracted from acquired media information of each interface, and then a G.107 standard E-Model algorithm is utilized to calculate speech quality related parameters and the speech MOS value.

Further, as a preferred technical solution, the interface media information comprises a RTP/RTCP stream, an RTCP MOS value of a terminal-to-terminal speech calculated on the basis of an RTCP data packet, and RTP_MOS values of segmented uplink and downlink speeches calculated on the basis of an RTP data packet.

Further, as a preferred technical solution, the speech quality related parameters comprise packet loss, delay, jitter, coding and decoding.

Further, as a preferred technical solution, in the step 2, a P.563 algorithm is adopted to calculate the speech MOS value.

Further, as a preferred technical solution, in the step 2, a P.862 PESQ algorithm is adopted to evaluate the speech quality.

Further, as a preferred technical solution, in the step 3, a 4G VoLTE speech is sliced to analyze quality; the quality of the sliced speech is presented on a two-second long slice curve; and speech quality slice analysis indicators comprise an MOS value, packet loss, delay and jitter.

Further, as a preferred technical solution, the slice curves comprise an RTP_MOS curve, an RTCP MOS curve, a perception MOS curve, a packet loss rate curve, a delay curve and a jitter curve.

Compared with the prior art, the present invention has the following advantages:
(1) The present invention utilizes a signaling-media integrated analysis technology to diagnose a speech fault in the calling process of a user; a terminal-to-terminal call record is generated according to the association of a signaling and a media; therefore, a signaling fault and a media fault can be positioned at the same time; and the present invention is more convenient and quicker, and can effectively position a fault.
(2) The present invention provides a speech quality fault four-domain six-dimension intelligent delimitation and positioning method; when a voice call fault occurs, the present invention can directly query in a media visual delimitation record the quality of the speech, the reasons and categories of the poor quality speech, and the delimitation of the poor quality speech, and can more intelligently position and delimit the call fault without a highly skilled, professional and experienced person.
(3) The present invention adopts a detailed sliced speech quality curve diagram to present the quality of the sliced speech via a two-second long slice; the indicators for analyzing the speech quality slices comprise an MOS value, packet loss, delay and jitter; furthermore, the waveform of the speech is presented in a visual form; when a single get-through speech fault occurs, a single get-through silence time period can be directly seen from the waveform, and the information pertaining to the position of a cell can also be seen from the diagram; when the cell is switched, a switching line will be drawn to mark the information pertaining to the positions of the cells before and after the switching, thus the fault can be quickly and effectively positioned.

### Brief Description of the Drawings

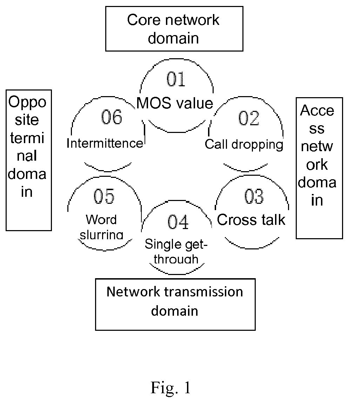

Fig.1 is a schematic view of the architecture of the four domains and six dimensions in the present invention.

### Detailed Description of Embodiments

The present invention will be further described in detail hereafter in combination with embodiments and the drawings. However, the embodiments of the present invention are not limited to the embodiments described herein.

### Embodiment

As shown in Fig. 1, the 2G3G4G speech quality fault four-domain six-dimension intelligent delimitation method in the embodiment comprises the following steps:
Step 1, establishing four domains for delimiting a poor quality speech and six dimensions influencing the quality of a voice call, wherein the four domains comprise a core domain, an access network domain, a network transmission domain and an opposite terminal domain, and the six dimensions comprise speech MOS value, call dropping, cross talk, single get-through, word slurring and intermittence;
Step 2, calculating/evaluating the speech MOS value; and
Step 3, slicing the speech to analyze quality, and presenting the speech quality in a visual waveform.

In the step 2, firstly key speech quality data is extracted from acquired media information of each interface, such as speech encoding mode, packet loss rate, delay value, jitter value and the like; and then a G.107 standard E-Model algorithm is utilized to calculate speech quality related parameters and the speech MOS value, wherein the speech quality related parameters comprise packet loss, delay, jitter, coding and decoding and the like.

Specifically, in the embodiment, a terminal-to-terminal media monitoring range comprises a call between 4G-4G users, a call between 2G/3G-2G/3G users, and an intercommunication call between 2G/3G-4G users. Fig. 1 shows a terminal-to-terminal media acquisition interface. Terminal-to-terminal media monitoring interfaces comprise 4G/VoLTE access network interface-Sl-U interface, IMS core network access-Gm interface, Mb interface-Nb interface, and 2G/3G/3G interface-A interface.

A 4G VoLTE network solution is on the basis of the 3GPP IMS criteria, and has been recognized as the main solution to solve the speech service in an LTE network. LTE accesses an IMS core network via a SGi/Gm interface to transmit SIP signaling data, and accesses an IP bearer network to transmit RTP media data. A 2G/3G TDM network analyzes the quality of a speech perception MOS on the basis of a speech data packet acquired via a BSC interface.

The embodiment adopts a four-domain six-dimension delimitation method to delimit a speech quality fault, wherein the four domains are used to delimit a poor quality speech; the six dimensions are used to express the six factors influencing the quality of a voice call; the four domains comprise a core domain, an access network domain, a network transmission domain and an opposite terminal domain; and the six dimensions comprise speech MOS value, call dropping, cross talk, single get-through, word slurring and intermittence.

During four-domain six-dimension delimitation, 28 reasons causing the poor quality of a speech are defined; therefore, the intelligent delimitation function can be effectively realized, and the fault reason of a speech can be more directly positioned. The specific reasons are as shown in table 1.

**Table 1 Reasons causing the poor quality of a speech**

| No. | Reasons for poor quality | Poor quality delimitation |
|---|---|---|
| 1 | Cross talk in core network | Core network domain |
| 2 | Single get-through in core network | |
| 3 | Single get-through in core network (intercommunication data) | |
| 4 | Serious packet loss in core network | |
| 5 | Serious packet loss in core network (intercommunication data) | |
| 6 | Jitter in core network | |
| 7 | Jitter in core network (intercommunication data) | |
| 8 | Packet loss in core network | |
| 9 | Packet loss in core network (intercommunication data) | |
| 10 | Call dropping at the calling party | Access network domain |
| 11 | Call dropping at the called party | |
| 12 | Call dropping at both parties | |
| 13 | Single get-through at the calling party | |
| 14 | Single get-through at the called party | |
| 15 | Serious uplink packet loss at the called party | |
| 16 | Uplink packet loss at the calling party | |
| 17 | Downlink packet loss at the called party | |
| 18 | Heavy downlink jitter at the called party | |
| 19 | Uplink packet loss at the called party | |
| 20 | Downlink packet loss at the calling party | |
| 21 | Downlink jitter at the calling party | |
| 22 | Long network delay | Network transmission domain |
| 23 | Single get-through at the opposite terminal | Opposite terminal domain |
| 24 | Packet loss at the opposite terminal | |
| 25 | Heavy jitter at the opposite terminal | |
| 26 | Single get-through at the opposite terminal (intercommunication data) | |
| 27 | Packet loss at the opposite terminal (intercommunication data) | |
| 28 | Jitter at the opposite terminal (intercommunication data) | |

The embodiment can adopt the RTP/RTCP MOS value evaluation method of the E-Model; for a VoLTE voice call, the G.107 standard E-model is adopted to calculate the MOS value of the speech; and key speech quality data is extracted from acquired media information (RTP/RTCP stream) of each interface; and the E-Model can also be utilized to calculate speech quality related parameters (packet loss, delay, jitter, coding and decoding) and an MOS value.

The VoLTE service adopts a UE-to-UE terminal-to-terminal media negotiation, transmission and control mechanism, the two UEs control the transmission of an RTCP data packet during calling process of the calling UE and the called UE. Terminal-to-terminal speech quality analysis can be realized on the basis of the analysis on the RTCP packet.

The RTCP_MOS value of a terminal-to-terminal speech can be calculated on the basis of the RTCP data packet; the RTP_MOS values of segmented uplink and downlink voices are calculated on the basis of an RTP data packet; and a poor quality cell and a poor quality network element can be effectively positioned according to the RTCP MOS value and the RTP MOS value in combination with uplink and downlink packet loss, delay and jitter parameters.

Certainly, the embodiment can also adopt a P.563 algorithm to calculate the perception MOS value, wherein the P.563 algorithm is a reference-free speech quality evaluation algorithm proposed by ITU, namely the algorithm does not require a reference speech during speech quality evaluation. The object is to predict the subjective quality of a speech signal transmitted via a narrow band telephone network; the speech signal may comprise background noise, speech intermittence, variable delay, and distortion caused by a channel error and a speech encoder.

The P.563 algorithm determines the main distortion type of a speech according to an extracted speech feature parameter, and utilizes a perceptual mapping model to calculate the final evaluation result. The P.563 algorithm totally extracts 43 different feature parameters, wherein 8 parameters are called key feature parameters, and are used to determine the distortion type of a speech.

In addition, the embodiment can also adopt a P.862 PESQ value evaluation method to evaluate the speech quality of VoLTE and GSM communication networks. The PESQ algorithm is an objective speech quality evaluation algorithm proposed by ITU. The PESQ algorithm is a product of the combination of an accurate perception model and a time arrangement technology, and fully absorbs the advantages of PSQM (perceptual speech quality measurement) and PAMS (perceptual analysis measurement system). A technology combining an improved auditory model and a cognitive model is adopted; therefore, compared with other algorithms, PESQ not only can be applied to a speech encoder/decoder, but also can be applied to terminal-to-terminal scenario, can better suppress speech delay and environmental noise in communication, and can be used to evaluate different types of networks.

In order to perform detailed analysis on speech quality, the embodiment slices a 4G VoLTE speech to analyze quality; the quality of the sliced speech is presented via a two-second long slice; a detailed sliced speech quality curve diagram is presented; and speech quality slice analysis indicators comprise an MOS value, packet loss, delay and jitter. Presenting the speech MOS value and the packet loss/delay/jitter indicators in transmission in a slice manner can better analyze the specific time period in which serious packet loss occurs.

The slice curves in the embodiment comprise an RTP_MOS curve, an RTCP MOS curve, a perception MOS curve, a packet loss rate curve, a delay curve and a jitter curve. The content of the voice call is displayed on an oscillogram; the speech fault can be presented in a visual form; and the speech quality fault can be effectively delimited and positioned.

It can be understood that the interface for presenting the media visual waveform can be automatically designed or adjusted, for example, the waveform presentation time range can be set as follows: if the call time is less than 30 seconds, all the waveforms will be displayed, and if the call time is longer than 30 seconds, only the 30 seconds speech waveforms before the end of the call will be displayed. The abscissa is a time axis, and the ordinate is the amplitude of a speech waveform. Once opened, the total call time will be displayed below the oscillogram.

Certainly, a few interface functions can also be set, such as zoom-in and zoom-out functions: the default waveform display mode is a full time state, and supports zoom-in and zoom-out functions. Horizontal zoom-in and zoom-out: namely the zooming of time granularity, wherein the minimum state of zoom-out is full time display. Vertical zoom-in and zoom-out: the zooming of waveform amplitude. Oscillogram button: the oscillogram will be displayed when clicked once, and will not be displayed when clicked again.

The terminal-to-terminal types are totally four: a calling party MO, a called party MT, an inter-office 1, and an inter-office 2; each type has two waveforms: an uplink oscillogram and a downlink oscillogram; the oscillograms of the inter-offices are interpolated between the oscillograms of the calling party and the oscillograms of the called party; first the oscillograms of the calling party are displayed, and then the oscillograms of the called party are displayed. The display sequence of the oscillograms is as follows:
(1) Uplink oscillogram of the calling party;
(2) Downlink oscillogram of the calling party;
(3) Uplink oscillogram of the inter-office 1;
(4) Downlink oscillogram of the inter-office 1;
(5) Uplink oscillogram of the inter-office 2;
(6) Downlink oscillogram of the inter-office 2;
(7) Uplink oscillogram of the called party;
(8) Downlink oscillogram of the called party;

Waveform comparison: a "display configuration" interface will appear when the set button is clicked, and the selection of oscillogram is supported. As for the display of the oscillograms, the comparison of any two oscillograms is supported, for example, only the first waveform and the second waveform are displayed, or only the first waveform and the fourth waveform are displayed.

With the above-described method, the present invention comprehensively analyzes a signaling and a media of a voice call, and establishes a speech service quality four-domain six-dimension intelligent demarcation method; singling data and media data are combined; the four-domain problem in a terminal-to-terminal link can be accurately positioned on the basis of the six-dimensional factors influencing the quality of the voice call; the speech quality can be analyzed quantitatively, visually and controllably; a few faults during the voice call can be intuitively seen according to the waveform of speech; furthermore, the present invention can view a speech service quality curve diagram, can visually present a speech fault, and can quickly and effectively delimit and position speech quality.

With the above-described method, the present invention can solve the following technical problems in the prior art, and can achieve good beneficial effects as follows:
1. An existing 2G/3G/4G voice call fault is diagnosed on the basis of the separate analysis of a signaling record and a media record. The present invention utilizes a signaling-media integrated analysis technology to diagnose a speech fault in the calling process of a user; a terminal-to-terminal call record is generated according to the association of a signaling and a media; therefore, a signaling fault and a media fault can be positioned at the same time; and the present invention is more convenient and quicker, and can effectively position a fault.
2. The diagnosis of the quality of an existing 2G/3G/4G speech service needs a person skilled in the art to delimit and position the problem, instead of using an automatic intelligent positioning and delimitation method. When a fault occurs to a call, only a highly skilled and experienced person can position the fault. The present invention provides a speech quality fault four-domain six-dimension intelligent delimitation and positioning method; when a voice call fault occurs, the present invention can directly query in a media visual delimitation record the quality of the speech, the reasons and categories of the poor quality speech, and the delimitation of the poor quality speech, and can more intelligently position and delimit the call fault.
3. When a voice call is analyzed in the prior art, only one media and signaling record is generated in the entire calling process, and the speech quality of the call is not analyzed in detail on the basis of a slicing technology. The present invention adopts a detailed sliced speech quality curve diagram to present the quality of the sliced speech via a two-second long slice; the indicators for analyzing the speech quality slices comprise an MOS value, packet loss, delay and jitter; furthermore, the waveform of the speech is presented in a visual form; when a single get-through speech fault occurs, a single get-through silence time period can be directly seen from the waveform, and the information pertaining to the position of a cell can also be seen from the diagram; when the cell is switched, a switching line will be drawn to mark the information pertaining to the positions of the cells before and after the switching.

As described above, the present invention can be better realized.

The descriptions above are only preferred embodiments of the present invention, and are not intended to limit the present invention in any form. And any simple modifications, equivalent substitutions and improvements made to the above-described embodiments on the basis of the technical essence of the present invention within the spirit and principles of the present invention shall still be concluded in the protection scope of the technical solution of the present invention.

## Claims

1. A 2G3G4G speech quality fault four-domain six-dimension intelligent delimitation method, comprising the following steps:
step 1, establishing four domains for delimiting a poor quality speech and six dimensions influencing the quality of a voice call, wherein the four domains comprise a core domain, an access network domain, a network transmission domain and an opposite terminal domain, and the six dimensions comprise speech MOS value, call dropping, cross talk, single get-through, word slurring and intermittence;
step 2, calculating/evaluating the speech MOS value; and
step 3, slicing the voice to analyze quality, and presenting the voice quality in a visual waveform.

2. The 2G3G4G speech quality fault four-domain six-dimension intelligent delimitation method according to claim 1, wherein in the step 2, firstly key speech quality data is extracted from acquired media information of each interface, and then a G.107 standard E-Model algorithm is utilized to calculate speech quality related parameters and the speech MOS value.

3. The 2G3G4G speech quality fault four-domain six-dimension intelligent delimitation method according to claim 2, wherein the interface media information comprises a RTP/RTCP stream, an RTCP MOS value of a terminal-to-terminal speech calculated on the basis of an RTCP data packet, and RTP_MOS values of segmented uplink and downlink speeches calculated on the basis of an RTP data packet.

4. The 2G3G4G speech quality fault four-domain six-dimension intelligent delimitation method according to claim 2, wherein the speech quality related parameters comprise packet loss, delay, jitter, coding and decoding.

5. The 2G3G4G speech quality fault four-domain six-dimension intelligent delimitation method according to claim 1, wherein in the step 2, a P.563 algorithm is adopted to calculate the speech MOS value.

6. The 2G3G4G speech quality fault four-domain six-dimension intelligent delimitation method according to claim 1, wherein in the step 2, a P.862 PESQ algorithm is adopted to evaluate the speech quality.

7. The 2G3G4G speech quality fault four-domain six-dimension intelligent delimitation method according to claim 2, wherein in the step 3, a 4G VoLTE speech is sliced to analyze quality; the quality of the sliced speech is presented on a two-second long slice curve; and speech quality slice analysis indicators comprise an MOS value, packet loss, delay and jitter.

8. The 2G3G4G speech quality fault four-domain six-dimension intelligent delimitation method according to claim 1, wherein the slice curves comprise an RTP_MOS curve, an RTCP MOS curve, a perception MOS curve, a packet loss rate curve, a delay curve and a jitter curve.
